# EUROPEAN PATENT APPLICATION

(11) **EP 4 848 259 A1**
(43) Date of publication of application: **02.12.2026**
(21) Application number: 25802476.9
(22) Date of filing: 23.04.2025
(51) Int. Cl.: G09F 9/30, F16M 13/00, F16H 37/12, F16H 1/22, F16H 25/20

(54) **DISPLAY APPARATUS AND CONTROL METHOD FOR DISPLAY APPARATUS**

(30) Priority: 16.05.2024 CN 202410610043
(71) Applicant: Boe Technology Group Co., Ltd., Beijing 100015 (CN)
(72) Inventor: WANG, Xinyu, Beijing 100176 (CN); CHU, Shangchieh, Beijing 100176 (CN); YANG, Yanyan, Beijing 100176 (CN)
(74) Representative: Haseltine Lake Kempner LLP
(86) International application number: PCT/CN2025/090737
(87) International publication number: WO 2025/237027

(57) **Abstract**

A display apparatus, and a control method for a display apparatus. The display apparatus (10) comprises: a first housing (11), a screen rotating shaft (12), a rotating shaft motor assembly (13), a flexible screen (14), a telescopic support (15), a lead screw motor assembly (16), a controller (17), and a second housing (18). When the flexible screen (14) is unfolded, the lead screw motor assembly (16) can, under the control of the controller (17), control a sliding block (163) to move on a lead screw (162) to drive the telescopic support (15) to extend, so as to pull the flexible screen (14) from the screen rotating shaft (12). When the flexible screen (14) is folded, the rotating shaft motor assembly (13) can, under the control of the controller (17), drive the screen rotating shaft (12) to rotate, so as to apply a pulling force to the flexible screen (14) and wind the flexible screen (14) onto the screen rotating shaft. In this way, the flexible screen (14) can be flatly wound on the screen rotating shaft (12), and the possibility of damage to the flexible screen (14) is reduced, achieving the effect of prolonging the service life of the display apparatus (10).

## Description

This application claims priority to Chinese Patent Application No. 202410610043.5, filed on May 16, 2024 and entitled "DISPLAY APPARATUS AND METHOD FOR CONTROLLING DISPLAY APPARATUS," the disclosure of which is incorporated herein by reference in its entirety.

### TECHNICAL FIELD

The present disclosure relates to the field of display technologies, and in particular, relates to a display apparatus and a method for controlling the display apparatus.

### BACKGROUND

A display apparatus is capable of providing display functionality. There are numerous types of display apparatuses, one of which is a display apparatus with a rollable screen structure.

A display apparatus includes a rotary shaft, a flexible screen, a rotary shaft housing, a telescopic rod, a motor, and a handle. The rotary shaft is disposed in the rotary shaft housing, both ends of the telescopic rod are connected to the rotary shaft housing and the handle respectively, both ends of the flexible screen are connected to the rotary shaft and the handle respectively, and the motor drives the telescopic rod to extend to pull the flexible screen out of the rotary shaft and drives the telescopic rod to retract to wind the flexible screen around the rotary shaft.

However, in response to retracting the flexible screen around the rotary shaft, the flexible screen in the above display apparatus is compromised in evenness, which increases the possibility of damage to the flexible screen and leads to a shorter service life of the display apparatus.

### SUMMARY

Embodiments of the present disclosure provide a display apparatus and a method for controlling the display apparatus. The technical solutions are as follows.

According to an aspect of embodiments of the present disclosure, a display apparatus is provided. The display apparatus includes: a first housing, a screen rotary shaft, a rotary shaft motor assembly, a flexible screen, a telescopic bracket, a lead screw motor assembly, a controller, and a second housing;
the screen rotary shaft and the rotary shaft motor assembly are disposed in the first housing, and the flexible screen includes a first edge and a second edge that are opposite in an extended state, wherein the first edge is connected to the screen rotary shaft, and the second edge is connected to the second housing;
an end of the telescopic bracket is connected to the first housing, and another end of the telescopic bracket is connected to the second housing; the lead screw motor assembly includes a motor bracket, a lead screw, and a slider disposed on the lead screw, wherein the motor bracket is connected to the first housing, and the slider is connected to the telescopic bracket, and the lead screw motor assembly is configured to drive the slider to move on the lead screw, so as to actuate the telescopic bracket to telescope;
the rotary shaft motor assembly includes a rotary shaft motor and a transmission member, wherein the transmission member is in linkage with the rotary shaft motor and the screen rotary shaft, and the rotary shaft motor is configured to actuate the screen rotary shaft to rotate; and
the controller is electrically connected to the lead screw motor assembly and the rotary shaft motor assembly.

In some embodiments, at least two rotary shaft motor assemblies are disposed, wherein the at least two rotary shaft motor assemblies include a first rotary shaft motor assembly and a second rotary shaft motor assembly, wherein a transmission member in the first rotary shaft motor assembly is in linkage with an end of the screen rotary shaft, and a transmission member in the second rotary shaft motor assembly is in linkage with another end of the screen rotary shaft.

In some embodiments, at least two lead screw motor assemblies are disposed, wherein the at least two lead screw motor assemblies include a first lead screw motor assembly and a second lead screw motor assembly, wherein the first lead screw motor assembly and the second lead screw motor assembly are disposed on two sides of the telescopic bracket in a first direction respectively, the first direction being perpendicular to a telescoping direction of the telescopic bracket.

In some embodiments, the telescopic bracket includes a plurality of crossbeams arranged along a second direction and a plurality of support rods disposed between two adjacent crossbeams in the plurality of crossbeams, wherein two ends of each of the plurality of support rods has a gear structure, the gear structures of the each of the plurality of support rods on two sides of each of the plurality of crossbeams are rotatably connected to the each of the plurality of crossbeams and are engaged with each other, and the second direction is parallel to a telescoping direction of the telescopic bracket; and
a back face of the flexible screen is in contact with the telescopic bracket.

In some embodiments, the slider of the lead screw motor assembly is connected to the plurality of crossbeams.

In some embodiments, the plurality of crossbeams includes first crossbeams and second crossbeams, wherein the first crossbeams and the second crossbeams are arranged alternately in the second direction,
two of the plurality of support rods are provided on a side of each of the first crossbeams, and at least 2 * n of the plurality of support rods are provided on a side of each of the second crossbeams, n being a positive integer greater than or equal to 2.

In some embodiments, the display apparatus further includes: a first device, a second device, a connecting wire, and a plurality of limiting structures, wherein
the plurality of limiting structures are disposed on the plurality of support rods, and each of the plurality of limiting structures includes a limiting hole; and
the first device and the second device are disposed on two sides of the plurality of limiting structures in the second direction respectively; and an end of the connecting wire is connected to the first device, and another end of the connecting wire passes through limiting holes of the plurality of limiting structures and is connected to the second device.

In some embodiments, the second device is the controller, and the first device includes at least one type of sensor.

In some embodiments, each of the plurality of support rods is provided with two of the plurality of limiting structures, wherein the two of the plurality of limiting structures are disposed at two ends of the each of the plurality of support rods respectively.

In some embodiments, the display apparatus further includes: a first sensor, wherein the first sensor is electrically connected to the controller, and
the first sensor is disposed at the screen rotary shaft and is configured to acquire a rotation angle of the screen rotary shaft.

In some embodiments, the display apparatus further includes: a second sensor, wherein the second sensor is electrically connected to the controller, and
the second sensor is disposed at the lead screw motor assembly and is configured to acquire a rotation angle of the lead screw.

In some embodiments, the second housing includes a grip shell and a first bracket, wherein the grip shell is connected to the first bracket; the controller is disposed on the first bracket; and the grip shell is connected to the second edge of the flexible screen.

In some embodiments, the display apparatus further includes: a transmission member bracket disposed in the first housing, wherein
the transmission member includes a first gear, a second gear and a third gear, wherein the first gear is connected to the screen rotary shaft; the third gear is in linkage with the rotary shaft motor; and the second gear is rotatably connected to the transmission member bracket, and is engaged with the first gear and the third gear.

In some embodiments, the rotary shaft motor assembly further includes a reducer, wherein the reducer is disposed in the first housing, the reducer and the rotary shaft motor are arranged in the first housing along a length direction of the screen rotary shaft, and the reducer includes an input shaft and an output shaft, wherein the input shaft is connected to the rotary shaft motor, and the output shaft is connected to the third gear.

In some embodiments, the display apparatus further includes: a telescopic slide rail, wherein the telescopic slide rail includes a first strip rail, a second strip rail, and at least one middle strip rail, wherein the first strip rail, the at least one middle strip rail, and the second strip rail are sequentially slidably connected along a telescoping direction of the telescopic slide rail, the telescoping direction of the telescopic slide rail being parallel to a telescoping direction of the telescopic bracket; and
the first strip rail is connected to the first housing, and the second strip rail is connected to the second housing.

In some embodiments, an end of the first strip rail is connected to the first housing; and
the telescopic slide rail includes a first connector and a second connector, wherein the first connector is connected to the first strip rail and the motor bracket, and the second connector is connected to the second strip rail and the second housing.

In some embodiments, the second housing includes a grip shell and a first bracket, wherein the grip shell is connected to the first bracket, the controller is disposed on the first bracket, and the grip shell is connected to the second edge of the flexible screen; and
the second connector is connected to the second strip rail and the first bracket.

In some embodiments, two telescopic slide rails are disposed, wherein the two telescopic slide rails are disposed on two sides of the telescopic bracket in a first direction respectively; the first direction being perpendicular to the telescoping direction of the telescopic bracket.

According to another aspect of the embodiments of the present disclosure, a method for controlling a display apparatus is provided. The method is applicable to the controller in the display apparatus as described above, and includes:
controlling, in response to receiving an extension instruction, a lead screw motor assembly in the display apparatus to start, wherein the lead screw motor assembly is configured to control a slider to move on a lead screw, so as to actuate the telescopic bracket to extend for pulling a flexible screen out of the screen rotary shaft; and
controlling, in response to receiving a retraction instruction, a rotary shaft motor assembly in the display apparatus to start, wherein the rotary shaft motor assembly is configured to actuate the screen rotary shaft to rotate, so as to wind the flexible screen around the screen rotary shaft.

According to another aspect of the embodiments of the present disclosure, a display device is provided. The display device includes: a processor and a memory, wherein the memory stores at least one instruction, at least one program, a code set, or an instruction set; and the at least one instruction, the at least one program, the code set, or the instruction set is loaded and executed by the processor to perform the method for controlling the display apparatus as described above.

According to another aspect of the embodiments of the present disclosure, a non-volatile computer storage medium is provided. The computer storage medium stores at least one instruction, at least one program, a code set, or an instruction set, wherein the at least one instruction, the at least one program, the code set, or the instruction set is loaded and executed by the processor to perform the method for controlling the display apparatus as described above.

The technical solutions according to the embodiments of the present disclosure have at least the following advantageous effects.

A display apparatus is provided. The display apparatus includes a first housing, a screen rotary shaft, a rotary shaft motor assembly, a flexible screen, a telescopic bracket, a lead screw motor assembly, a controller, and a second housing is provided. During extension of the flexible screen, the lead screw motor assembly controls, under the control of the controller, a slider to move on a lead screw, so as to actuate the telescopic bracket to extend for pulling the flexible screen out of the screen rotary shaft; and during retraction of the flexible screen, the rotary shaft motor assembly actuates, under the control of the controller, the screen rotary shaft to rotate, so as to apply a pulling force to the flexible screen and wind the flexible screen around the screen rotary shaft; and in this way, the flexible screen is evenly wound around the screen rotary shaft, such that the possibility of damage to the flexible screen is reduced, and the service life of the display apparatus is prolonged.

### BRIEF DESCRIPTION OF DRAWINGS

To describe the technical solutions according to the embodiments of the present disclosure more clearly, the following briefly introduces the accompanying drawings to be used in the description of the embodiments. Obviously, the accompanying drawings in the following description show merely some embodiments of the present disclosure, and a person of ordinary skills in the art may still derive other drawings from these accompanying drawings without creative efforts.
FIG. 1 is a schematic structural diagram of a display apparatus according to some embodiments of the present disclosure;
FIG. 2 is a schematic structural diagram of a partial structure of the display apparatus shown in FIG. 1;
FIG. 3 is a schematic diagram of an internal structure of the display apparatus shown in FIG. 1;
FIG. 4 is a schematic diagram of an internal structure of the display apparatus shown in FIG. 1;
FIG. 5 is a schematic diagram of a partial structure inside a first housing shown in FIG. 4;
FIG. 6 is a schematic structural diagram of the display apparatus shown in FIG. 1 in another state;
FIG. 7 is a schematic diagram of an internal structure of the display apparatus shown in FIG. 1;
FIG. 8 is a schematic diagram of an internal structure of the display apparatus shown in FIG. 1;
FIG. 9 is a schematic structural diagram of the display apparatus shown in FIG. 8 from another angle of view;
FIG. 10 is a schematic structural diagram of a telescopic bracket in the display apparatus shown in FIG. 8;
FIG. 11 is a schematic diagram of an internal structure of a display apparatus according to some embodiments of the present disclosure;
FIG. 12 is schematic structural diagram of a partial region in the display apparatus shown in FIG. 11;
FIG. 13 is schematic structural diagram of a grip shell in the display apparatus shown in FIG. 11;
FIG. 14 is schematic structural diagram of a first housing in the display apparatus shown in FIG. 11;
FIG. 15 is a schematic diagram of a partial structure shown in FIG. 11;
FIG. 16 is another schematic diagram of a partial structure shown in FIG. 15;
FIG. 17 is a schematic diagram of a cross-section structure of the display apparatus shown in FIG. 1;
FIG. 18 is a schematic diagram of a cross-section structure of the display apparatus shown in FIG. 1;
FIG. 19 is a schematic diagram of a cross-section structure of the display apparatus shown in FIG. 1;
FIG. 20 is a schematic diagram of a cross-section structure of the display apparatus shown in FIG. 1;
FIG. 21 is a schematic structural diagram of a partial structure of the structure shown in FIG. 20;
FIG. 22 is a schematic structural diagram of the structure shown in FIG. 21; and
FIG. 23 is a flowchart of a method for controlling a display apparatus according to some embodiments of the present disclosure.

The embodiments of the present disclosure have been illustrated explicitly through the drawings above, and will be described in further detail hereinafter. These drawings and text descriptions are not intended to limit the scope of conception of the present disclosure in any way, but to illustrate the concept of the present disclosure to a person of skill in the art with reference to specific embodiments.

### DETAILED DESCRIPTION

To describe the objects, technical solutions, and advantages of the present disclosure more clearly, the embodiments of the present disclosure are further described in detail hereinafter in conjunction with the accompanying drawings.

A display apparatus with a rollable screen structure is a new type of display apparatus at present, and may offer a larger display region compared to a conventional tablet display apparatus and avoid the problem of creasing compared to a display apparatus with a foldable screen.

A current display apparatus with a rollable screen structure includes a rotary shaft, a flexible screen, a rotary shaft housing, a telescopic rod, a motor and a handle. The rotary shaft is disposed in the rotary shaft housing, both ends of the telescopic rod are connected to the rotary shaft housing and the handle respectively, both ends of the flexible screen are connected to the rotary shaft and the handle respectively, and the motor drives the telescopic rod to extend to pull the flexible screen out of the rotary shaft and drives the telescopic rod to retract to wind the flexible screen around the rotary shaft.

However, in a case where the flexible screen in the aforementioned display apparatus is retracted around the rotary shaft, the evenness of the flexible screen wound around the rotary shaft is compromised since the flexible screen is pushed towards the rotary shaft by the motor and then wound around the rotary shaft, potentially leading to collisions with the rotary shaft housing. As a result, the possibility of damage to the flexible screen is increased, leading to a shorter service life of the display apparatus.

Embodiments of the present disclosure provide a display apparatus a method for controlling the display apparatus, and a computer storage medium, which may solve some problems in some practices described above.

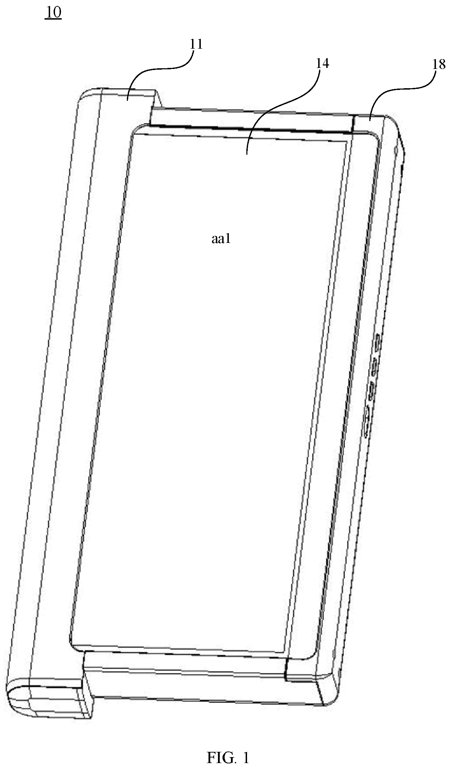

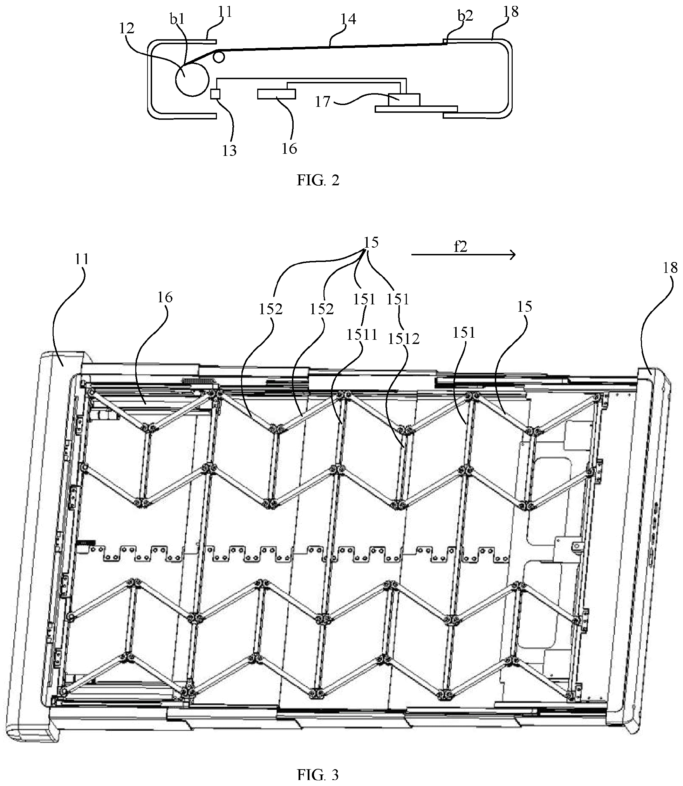

FIG. 1 is a schematic structural diagram of a display apparatus according to some embodiments of the present disclosure. Referring to FIG. 1, a display apparatus 10 includes a first housing 11, a flexible screen 14, and a second housing 18. Referring to FIG. 2, FIG. 2 is a schematic structural diagram of a partial structure of the display apparatus shown in FIG. 1 (FIG. 2 may be a simplified schematic structural diagram of a cross-section structure of the display apparatus shown in FIG. 1). The display apparatus 10 includes a screen rotary shaft 12, a rotary shaft motor assembly 13, a lead screw motor assembly 16, and a controller 17. Referring to FIG. 3, FIG. 3 is a schematic diagram of an internal structure of the display apparatus shown in FIG. 1 (FIG. 3 may be a schematic diagram of the internal structure of the display apparatus shown in FIG.1 in an extended state, and structures such as the flexible screen are not shown in FIG. 3). The display apparatus 10 includes a telescopic bracket 15.

Specifically, referring to FIG. 2, the screen rotary shaft 12 and the rotary shaft motor assembly 13 are disposed in the first housing 11, and the flexible screen 14 includes a first edge b1 and a second edge b2 that are opposite in an extended state, the first edge b1 is connected to the screen rotary shaft 12, and the second edge b2 is connected to the second housing 18. In the embodiments of the present disclosure, the flexible screen 14 may be any type of flexible display panel, for example, a flexible organic light-emitting diode display panel. The extended state may refer to a state in which the flexible screen 14 is connected only to the screen rotary shaft 12 but is not wound around the screen rotary shaft 12. In some exemplary embodiments, the flexible screen 14 may be rectangular, and the first edge b1 and the second edge b2 may be two opposite edges of the rectangular flexible screen.

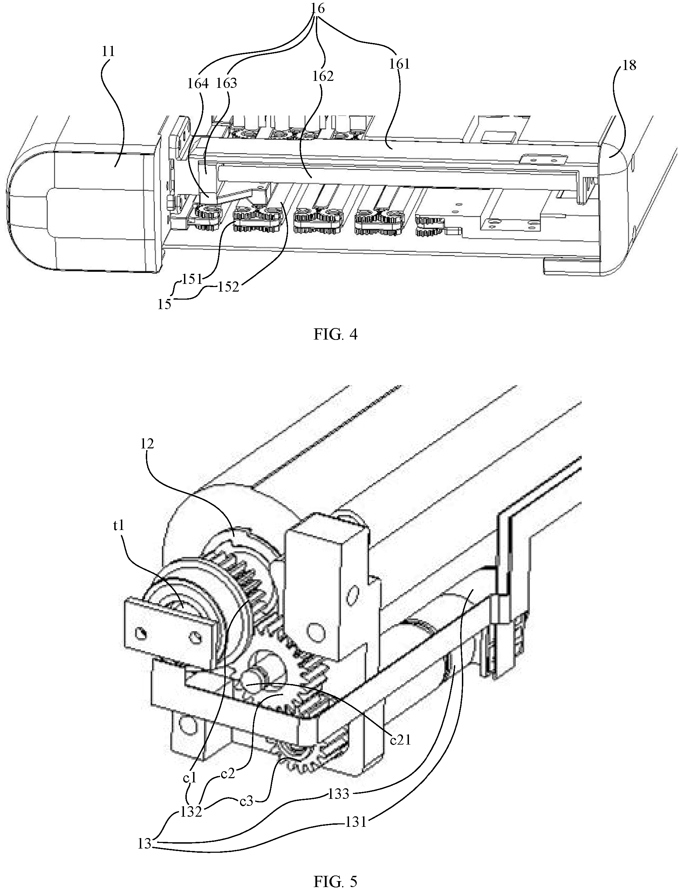

Referring to FIG. 3, an end of the telescopic bracket 15 is connected to the first housing 11, and another end of the telescopic bracket 15 is connected to the second housing 18. Referring to FIGS. 3 and 4, FIG. 4 is a schematic diagram of an internal structure of the display apparatus shown in FIG. 1 (structures such as part of the housing and the flexible screen are not shown in FIG. 4 to clearly show the internal structure). The lead screw motor assembly 16 includes a motor bracket 161, a lead screw 16 2, and a slider 163 disposed on the lead screw 161. The motor bracket 161 is connected to the first housing 11, the slider 163 is connected to the telescopic bracket 15, the lead screw motor assembly 16 is configured to drive the slider 163 to move on the lead screw 161, so as to actuate the telescopic bracket 15 to telescope.

Referring to FIG. 5, FIG. 5 is a schematic diagram of a partial structure inside a first housing shown in FIG. 4 (FIG. 5 is a schematic diagram of a partial structure at an end of the screen rotary shaft in the structure shown in FIG. 4). The rotary shaft motor assembly 13 includes a rotary shaft motor 131 and a transmission member 132. The transmission member 132 is in linkage with the rotary shaft motor 131 and the screen rotary shaft 12, and the rotary shaft motor 131 is configured to actuate the screen rotary shaft 12 to rotate.

Referring to FIG. 2, the controller 17 is electrically connected to the lead screw motor assembly 16 and the rotary shaft motor assembly 13, and the controller 17 is configured to control the lead screw motor assembly 16 and the rotary shaft motor assembly 13. It should be noted that FIG. 2 only shows the electrical connection relationship between the controller 17, the lead screw motor assembly 16, and the rotary shaft motor assembly 13, and is not intended to limit the positions and structures of these structures.

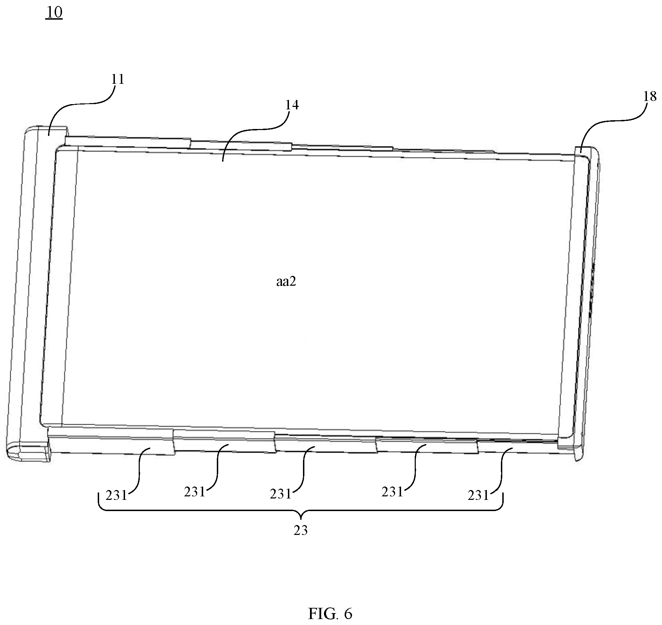

In addition, referring to FIGS. 1 and 6, FIG. 6 is a schematic structural diagram of the display apparatus shown in FIG. 1 in another state. In FIG. 1, the display apparatus is in a retracted state. In this state, the overall display apparatus is smaller, making it easier for a user to store the display apparatus, and the flexible screen 14, which is retracted below a smaller display region aa1, may be viewed to acquire information (the flexible screen of the display apparatus has a display surface and a back face that are opposite each other, and the display region is disposed on the display surface and increases and decreases as the flexible screen is extended and retracted). The display apparatus in FIG. 6 is in an extended state. In this state, the flexible screen 14 is extended from the screen rotary shaft to form a larger display region aa2. In this way, the display effect of the display apparatus is improved, thereby enhancing the user experience.

In summary, the embodiments of the present disclosure provide a display apparatus. The display apparatus includes a first housing, a screen rotary shaft, a rotary shaft motor assembly, a flexible screen, a telescopic bracket, a lead screw motor assembly, a controller, and a second housing is provided. During extension of the flexible screen, the lead screw motor assembly controls, under the control of the controller, a slider to move on a lead screw, so as to actuate the telescopic bracket to extend for pulling the flexible screen out of the screen rotary shaft; and during retraction of the flexible screen, the rotary shaft motor assembly actuates, under the control of the controller, the screen rotary shaft to rotate, so as to apply a pulling force to the flexible screen and wind the flexible screen around the screen rotary shaft; and in this way, the flexible screen is evenly wound around the screen rotary shaft, such that the possibility of damage to the flexible screen is reduced, and the service life of the display apparatus is prolonged.

It should be noted that the "linkage" between structures A and B involved in the embodiments of the present disclosure means that the structures A and B are structurally associated, and a change in the state (such as a position state, a rotation state, etc.) of one structure may cause a change in the state of another structure. For example, the linkage between the transmission member 132 and the rotary shaft motor 131 means that the rotary shaft motor 131 may transmit the rotation of its own rotary shaft to the transmission member 132; and the transmission member 132 is in turn in linkage with the screen rotary shaft 12, such that the transmission member 132 transmits the rotation provided by the rotary shaft motor 131 to the screen rotary shaft 12, such that the rotary shaft motor 131 actuates the screen rotary shaft 12 to rotate.

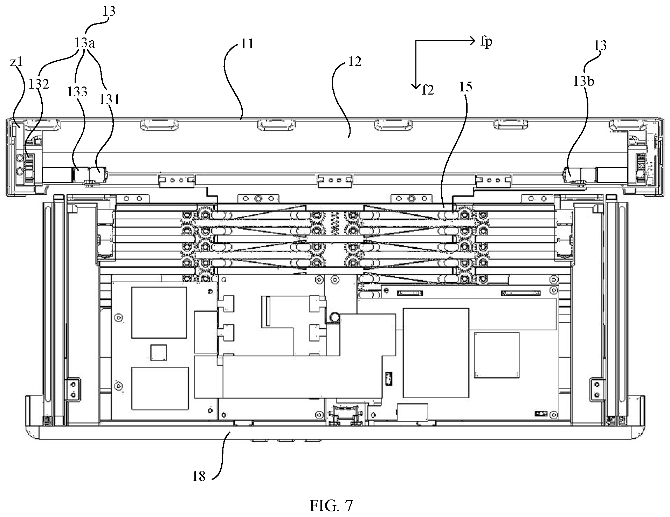

In some exemplary embodiments, referring to FIGS. 5 and 7, FIG. 7 is a schematic diagram of the internal structure of the display apparatus shown in FIG. 1 (FIG. 7 may be a schematic diagram of a side of the back face of the display apparatus shown in FIG. 1; in addition, FIG. 7 does not show the housing of the display apparatus to clearly show the internal structure; and in addition, the telescopic bracket 15 and the first housing 11 in FIG. 7 are in a separated state, which is not limited to this). At least two rotary shaft motor assemblies 13 are disposed, and the at least two rotary shaft motor assemblies 13 include a first rotary shaft motor assembly 13a and a second rotary shaft motor assembly 13b. A transmission member 132 in the first rotary shaft motor assembly 13a is in linkage with an end of the screen rotary shaft 12, and a transmission member 132 in the second rotary shaft motor assembly 13b is in linkage with another end of the screen rotary shaft. The structure of at least one of the first rotary shaft motor assembly 13a and the second rotary shaft motor assembly 13b is as shown in FIG. 5. In this way, the two rotary shaft motor assemblies that are in linkage with both ends of the screen rotary shaft 12 respectively may drive both ends of the screen rotary shaft 12 to rotate, such that forces on both ends of the screen rotary shaft 12 are uniform and balanced, thereby improving the stability and smoothness of the screen rotary shaft 12 during rotating. In addition, both ends of the screen rotary shaft 12 are driven to rotate, such that the problem of uneven winding of the flexible screen caused by the elastic deformation of the screen rotary shaft 12 in response to an end being driven may be avoided.

In some embodiments, the display apparatus further includes a transmission member bracket z1 disposed in the first housing 11; the transmission member 132 includes a first gear c1, a second gear c2 and a third gear c3; the first gear c1 is connected to the screen rotary shaft 12; the third gear c3 is in linkage with the rotary shaft motor 131; and the second gear c2 is rotatably connected to the transmission member bracket z1, and is engaged with the first gear c1 and the third gear c2. In this way, the transmission member has a simple and stable structure The transmission member 132 may also be of another structure. For example, the transmission member includes more or fewer gears, or the transmission member 132 is of a crawler transmission structure or a belt transmission structure, and the like, which are not limited in the embodiments of the present disclosure.

In some embodiments, referring to FIGS. 5 and 7, the rotary shaft motor assembly 13 further includes a reducer 133; the reducer 133 is disposed in the first housing 11; the reducer 133 and the rotary shaft motor 131 are arranged in the first housing 11 along a length direction fp of the screen rotary shaft 12; the reducer 133 is in linkage with the rotary shaft motor 131; the reducer 133 includes an input shaft and an output shaft (which are not shown in the drawings); the input shaft is connected to the rotary shaft motor 131; and the output shaft is connected to the third gear c3. The reducer 133 is configured to match the rotation speed and transmit the torque between the rotary shaft motor 131 and the screen rotary shaft 12, for example, to reduce the rotation speed and increase the torque. The input shaft of the reducer 133 is connected to a prime mover (such as various motors), and the input shaft is connected to an actuator (such as various rotary shafts), such that the reducer 133 converts high-speed power input by the input shaft into low-speed power and transmit the low-speed power to the output shaft for output.

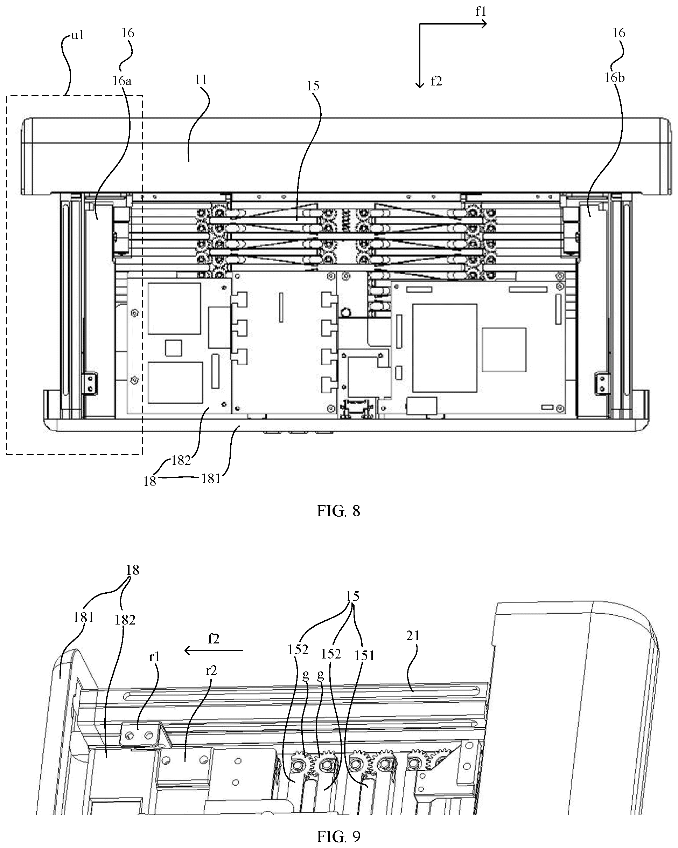

In some exemplary embodiments, referring to FIGS. 8 and 4, FIG. 8 is a schematic diagram of an internal structure of the display apparatus shown in FIG. 1 (FIG. 8 may be a schematic diagram of a side of the back face of the display apparatus shown in FIG. 1; and in addition, FIG. 8 does not show the housing of the display apparatus to clearly show the internal structure,). At least two lead screw motor assemblies 16 are disposed; the at least two lead screw motor assemblies 16 include a first lead screw motor assembly 16a and a second lead screw motor assembly 16b; the first lead screw motor assembly 16a and the second lead screw motor assembly 16b are disposed on two sides of the telescopic bracket 15 in a first direction f1 respectively; and the first direction f1 (the length direction fp of the screen rotary shaft 12 may be parallel to the first direction f1) is perpendicular to the telescoping direction f2 of the telescopic bracket 15. The structure of at least one of the first lead screw motor assembly 16a and the second lead screw motor assembly 16b is as shown in FIG. 4.

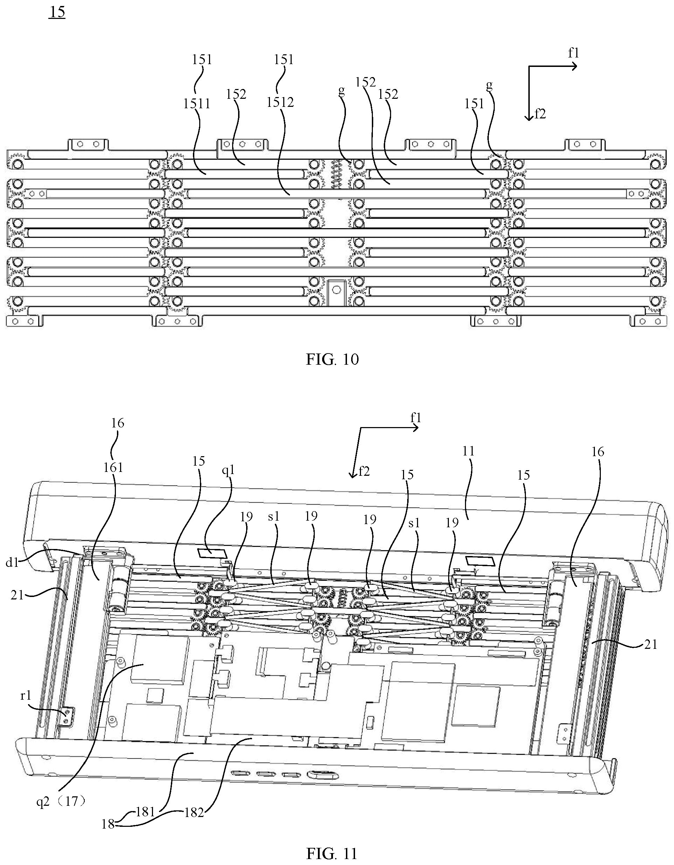

Referring to FIGS. 3, 9 and 10, FIG. 9 is a schematic structural diagram of the display apparatus shown in FIG. 8 from another angle of view (FIG. 9 may be a schematic diagram of a region u1 in FIG. 8, and the lead screw motor assembly 16 is not shown in FIG. 9 to clearly show a partial structure). FIG. 10 is a schematic structural diagram of a telescopic bracket in the display apparatus shown in FIG. 8. The telescopic bracket 15 includes a plurality of crossbeams 151 arranged along a second direction f2 and a plurality of support rods disposed between two adjacent crossbeams 151 in the plurality of crossbeams 151; two ends of each of the support rods 152 have gear structures g; the gear structures g of the support rods 152 on two sides of each of the crossbeams 151 are rotatably connected to the crossbeam 151, and are engaged with each other; the second direction f2 is parallel to an telescoping direction of the telescopic bracket 15; and the slider 163 of the lead screw motor assembly 16 is connected to the crossbeams 151. An included angle between the length direction of each cross beam 151 and the second direction f2 is greater than zero and less than or equal to 90 degrees. FIG. 3 shows a case that the included angle is 90 degrees, but the included angle is not limited to this. In this structure, any one of the crossbeams 151 in the telescopic bracket 15 is pushed to cause the entire telescopic bracket 15 to extend or retract through the gear structures g of the two support rods 152 that are engaged with each other. The telescopic bracket 15 of this structure may be referred to a telescopic bracket of a harmonium structure.

In some exemplary embodiments, referring to FIGS. 3 and 10, the plurality of crossbeams 151 includes first crossbeams 1511 and second crossbeams 1512, and the first crossbeams 1511 and the second crossbeams 1512 are arranged alternately in the second direction. Two of the support rods 152 are provided on a side of each of the first crossbeams 1511, and at least 2 * n of the support rods 152 are provided on a side of each of the second crossbeams 1512. n is a positive integer greater than or equal to 2. FIG. 10 shows the case where n is 2, but this is not limited in the embodiments of the present disclosure.

In addition, in the display apparatus according to the embodiment of the present disclosure, the telescopic bracket 15 may be of another structure. For example, the telescopic bracket 15 is a hydraulic-rod telescopic bracket or of other structures, which is not limited in the embodiment of the present disclosure.

In some exemplary embodiments, referring to FIG. 4, the lead screw motor assembly 16 further includes an auxiliary connector 164. The auxiliary connector 164 is connected to the slider 163 and the crossbeams 151 of the telescopic bracket 15. The auxiliary connector 164 may reduce the difficulty in connecting the slider 163 to the crossbeams 151 and facilitate the design of the internal structural of the display apparatus.

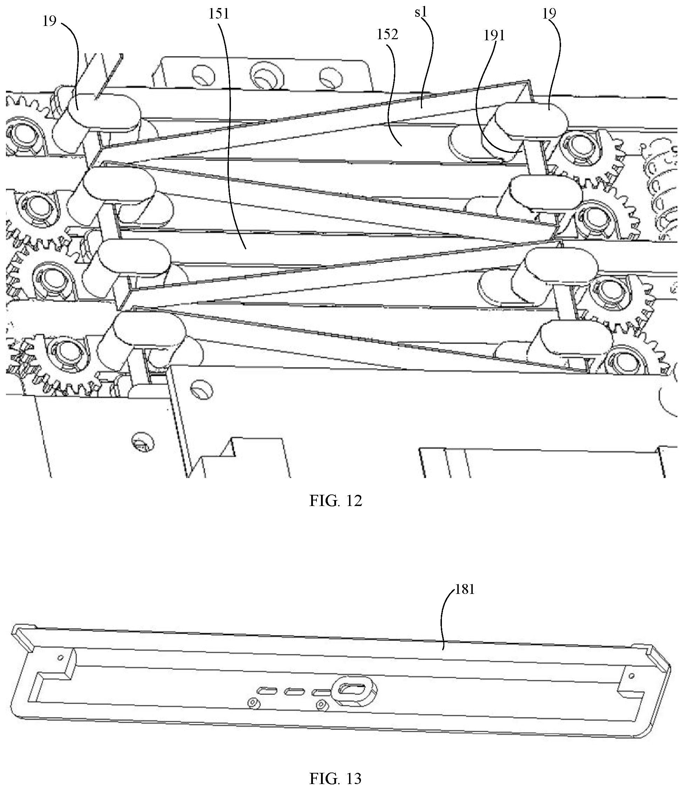

Referring to FIGS. 11 and 12, FIG. 11 is a schematic diagram of an internal structure of another display apparatus according to some embodiments of the present disclosure, and FIG. 12 is a schematic structural diagram of a partial region in the display apparatus shown in FIG. 11. The display apparatus further includes a first device q1, a second device q2, a connecting wire s1, and a plurality of limiting structures 19. The plurality of limiting structures 19 are disposed on the plurality of support rods 152, and each of the limiting structures 19 includes a limiting hole 191. The first device q1 and the second device q2 are disposed on two sides of the plurality of limiting structures 19 in the second direction f2 respectively. An end of the connecting wire s1 is connected to the first device q1, and the other end of the connecting wire s1 passes through the limiting holes 191 of the plurality of limiting structures 19 and is connected to the second device q2. With such a structure, the limiting structures 19 is configured to limit the movement of the connecting wire s1 to prevent the connecting wire s1 from falling into the telescopic bracket 15 (for example, falling between the support rods 152 and the cross beams 151) during extension and retraction of the telescopic bracket 15. In this way, the connecting wire s1 is prevented from being damaged by the telescopic bracket 15, and the connecting wire is further prevented from affecting the normal extension and retraction of the telescopic bracket 15.

It should be noted that the first device q1 and the second device q2 are any two electrically connected devices in the display apparatus according to the embodiment of the present disclosure. FIG. 11 is only a schematic illustration and is not intended to limit the specific positions of the first device q1 and the second device q2, as long as the first device q1 and the second device q2 are respectively disposed on two sides of the plurality of limiting structures 19 in the second direction f2.

In some embodiments, each of the support rods 152 is provided with two of the limiting structures 19, and the two of the limiting structures 19 are disposed at two ends of the support rod 152 respectively. In this way, a distance between two limiting structures 19 increases, and a number of the limiting structures 19 is reduced, thereby simplifying the overall structure. With such a structure, the connecting wire s1 passes through the plurality of limiting structures 19 in an S-shape. Specifically, the connecting wire s1 first passes through two limiting structures 19 on a support rod 152, then passes through a limiting structure at an end of the adjacent supporting rod 152, and then passes through a limiting structure 19 at another end of the adjacent supporting rod 152, and so on, to pass through the plurality of limiting structures 19.

In some embodiments, the second device q2 is the controller 17, and the first device q1 includes at least one type of sensor. The sensor is configured to acquire various data and transmit these data to the controller 17 to facilitate the controller 17 to control the rotary shaft motor assembly and the lead screw motor assembly based on these data.

In some embodiments, referring to FIG. 5, the display apparatus further includes: a first sensor t1. The first sensor t1 is electrically connected to the controller (not shown in FIG. 5).

The first sensor t1 is disposed at the screen rotary shaft 12 and is configured to acquire a rotation angle of the screen rotary shaft 12. The controller may control the screen rotary shaft 12 based on the rotation angle of the screen rotary shaft 12 acquired by the first sensor t1 to precisely control the rotation angle of the screen rotary shaft 12. Then, in response to pulling the flexible screen out of the screen rotary shaft 12 by the lead screw motor assembly, a pulling force is applied by precisely controlling the rotation angle of the screen rotary shaft 12, such that friction and rebound forces produced during the movement of the flexible screen are offset by the pulling force. Consequently, the evenness of the flexible screen and the user experience are improved.

In some embodiments, the display apparatus further includes: a second sensor. The second sensor is electrically connected to the controller.

The second sensor is disposed at the lead screw motor assembly and is configured to acquire a rotation angle of the lead screw. Similar to the first sensor, a control assembly may acquire the rotation angle of the lead screw acquired by the second sensor, thereby achieving precise control of the rotation angle of the screen rotary shaft 12. In some embodiments, the control assembly precisely controls the length of the flexible screen pulled out by the lead screw motor assembly, such that the problem of unevenness of the flexible screen caused by pulling out the flexible screen too short is avoided, and the problem of the excessive force (which may cause damage to the flexible screen) on the flexible screen caused by pulling out the flexible screen too long is avoided.

Referring to FIG. 11, the second housing 18 includes a grip shell 181 and a first bracket 182, the grip shell 181 is connected to the first bracket 182, the controller 17 is disposed on the first bracket 182, and the grip shell 181 is connected to the second edge of the flexible screen. The first bracket 182 is a bracket inside the display apparatus, and is configured for arrangement of a partial structure inside the display apparatus. For example, the first bracket 182 is provided with structures such as circuit boards (such as motherboards), vapor chamber (VC) heat sinks, batteries and graphene sheets. In addition, referring to FIG. 13, FIG. 13 is a schematic structural diagram of a grip shell in the display apparatus shown in FIG. 11. The grip shell 181 is gripped by a user, such that the user grips the display apparatus stably.

For conversion of the display apparatus into the extended state, the controller controls the lead screw motor assembly in the display apparatus to start, and the lead screw motor assembly is configured to control the slider to move on the lead screw, so as to actuate the telescopic bracket to extend for pulling the flexible screen out of the screen rotary shaft, thereby converting the display apparatus into the extended state. For conversion of the display apparatus into the retracted state, the controller controls the rotary shaft motor assembly in the display apparatus to start, and the rotary shaft motor assembly is configured to actuate the screen rotary shaft to rotate, so as to wind the flexible screen around the screen rotary shaft, thereby converting the display apparatus into the retracted state.

In some embodiments, the display apparatus is provided with physical buttons (such as a screen locking button or an independent state switching button), such that the user switches the display apparatus between the retracted and extended states by triggering these buttons; or, the flexible screen of the display apparatus displays virtual buttons, such that the user switches the display apparatus between the retracted and extended states by triggering these virtual buttons; or, the display apparatus issues an instruction to the controller based on a received voice instruction, such that the user switches between the retracted and extended states. Furthermore, the display apparatus may also receive an instruction from an external control device to trigger the display apparatus to switch between the retracted and extended states. The control device may be a smart wearable device (such as a smart watch, a smart bracelet, a smart ring, and smart glasses), or an independent control device for controlling the display apparatus, which is not limited in the embodiment of the present disclosure.

In addition, the controller may trigger, under the control of preset instructions, the display apparatus to switch between the retracted and extended states. For example, triggering the preset instructions for switching to the extended state includes: triggering an extension instruction in response to the display apparatus being turned on; triggering the extension instruction in response to the display apparatus being playing back a video; triggering the extension command in response to the display apparatus starting a preset application (App, which may be set by the user; or Apps, such as a paint App, a text reader, a photo browser App, and a photo and video editing App, are set by default by the system). Triggering the preset instructions for switching to the extended state includes: triggering a retraction instruction in response to the display apparatus being turned off; triggering the retraction instruction in response to receiving the screen locking instruction, etc.

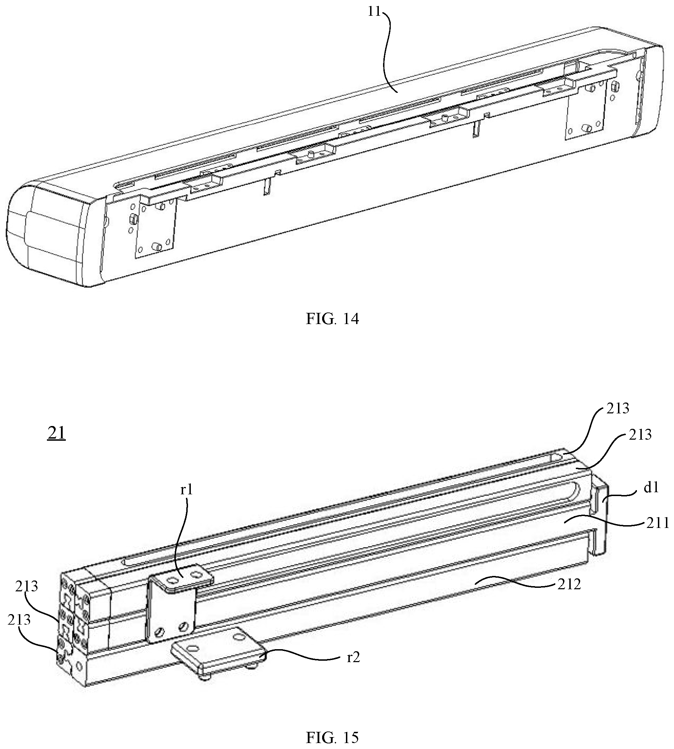

In addition, referring to FIG. 14, FIG. 14 is a schematic structural diagram of a first housing in the display apparatus shown in FIG. 11. The first housing 11 is provided with a screen rotary shaft, and an internal storage space is defined in the first housing 11. The storage space is sized to accommodate the entire structure of the screen rotary shaft and the flexible screen in a case where the flexible screen is fully wound around the screen rotary shaft.

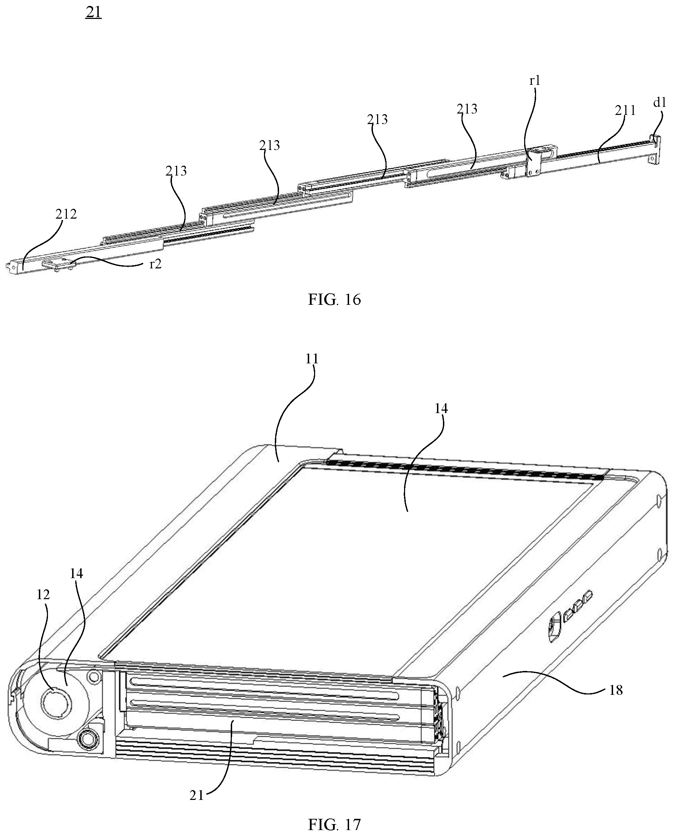

Referring to FIGS. 9, 15 and 16, FIG. 15 is a schematic diagram of a partial structure in FIG. 11, and FIG. 16 is a schematic diagram of the partial structure shown in FIG. 15. The display apparatus further includes: a telescopic slide rail 21. The telescopic slide rail 21 includes a first strip rail 211, a second strip rail 212, and at least one middle strip rail 213. The first strip rail 211, the at least one middle strip rail 213, and the second strip rail 212 are sequentially slidably connected along the telescoping direction of the telescopic slide rail 21, the telescoping direction of the telescopic slide rail 21 is parallel to the telescoping direction f2 of the telescopic bracket. The first strip rail 211 is connected to the first housing 11, and the second strip rail 212 is connected to the second housing 18. FIG. 15 is a schematic structural diagram of the telescopic slide rail 21 in FIG. 11 in a retracted state, and FIG. 15 is a schematic structural diagram of the telescopic slide rail 21 shown in FIG. 11 in an extended state. In some embodiments, for any two slidably connected strip rails among the first strip rail 211, the second strip rail 212, and at least one middle strip rail 213, a strip rail includes a protrusion structure extending along the length direction of the strip rail, and a size of an end of the protrusion structure away from the strip rail is larger than a size of an end the protrusion structure close to the strip rail; and another strip rail is provided with a strip groove that has a shape matching (similar to) the shape of the protrusion structure. The strip groove with such a structure catches the protrusion structure to prevent the two strip rails from moving relative to each other in the length direction perpendicular to the strip rails and allow the two strip rails to slide relative to each other in the length direction parallel to the strip rails. In addition, the strip rails are provided with limiting structures configured to prevent the two slidably connected strip rails from detaching from each other in the length direction parallel to the strip rails. Such a structure may allow the telescopic slide rail to telescope.

The telescopic slide rail 21 is configured to improve the overall strength of the display apparatus to further improve the stability of the display apparatus during the process of retraction and extension and reduce possible deformation of the display apparatus after extension. Moreover, the telescopic slide rail 21 with the above-mentioned structure is simple in structure and low in failure rate, with sturdiness and stability.

In some embodiments, referring to FIGS. 11, 15 and 16, an end d1 of the first strip rial 211 is connected to the first housing; the telescopic slide rail 21 includes a first connector r1 and a second connector r2. The first connector r1 is connected to the first strip rail 211 and the motor bracket 161, and the second connector r2 is connected to the second strip rail 212 and the second housing 18. The first connector r1 allow for fixed connection between the first strip rail 211 and the motor bracket 161. Based on this, the first strip rail 211 is fixedly connected to both the first housing 11 and the motor bracket 161, and the motor bracket 161 is also fixedly connected to the first housing 11. In this way, the stability of the connection between the telescopic slide rail 21 and the first housing 11 is improved.

In some embodiments, the first connector r1 is disposed at the end of the first strip rail 211 away from the first housing 11. In this way, the stability of the end of the first strip rail 211 away from the first housing 11 is improved, thereby further improving the stability of the connection between the telescopic slide rail 21 and the first housing 11. In addition, the first connector r1 may be an L-shaped plate, and the two plate faces of the L-shaped plate are fixedly connected (for example, via screws) to the first strip rail 211 and the motor bracket 161respectively. The L-shaped plate has a simple and sturdy structure and may fulfill the role of the first connector r1.

In some embodiments, referring to FIG. 9, the second connector r2 is connected to the second strip rail 212 and the first bracket 182 in the second housing 18. In this way, a connecting structure is provided for the second connector r2 and the second housing 18. Compared with the connecting structure for the end of the second strip rail 212 and the second housing 18, this connecting structure is sturdier and reduces the risk of damaging the connection between the second strip rail 212 and the second housing 18 by external forces.

In some embodiments, referring to FIG. 11, two telescopic slide rails 21 are disposed. The two telescopic slide rails 21 are disposed on two sides of the telescopic bracket 15 in the first direction f1; and the first direction f1 is perpendicular to the telescoping direction f2 of the telescopic bracket 15. In this way, the overall strength of the display apparatus is further improved, and the stability of the display apparatus during the processes of retraction and extension is improved, such that the possible deformation of the display apparatus after extension is further reduced.

FIG. 17 is a schematic diagram of a cross-section structure of the display apparatus shown in FIG. 1 (the cross-section is a surface that is perpendicular to the display surface of the flexible screen and the axis of the screen rotary shaft). As can be seen from FIG. 17, the display apparatus is in a retracted state, and the flexible screen 14 includes a portion wound around the screen rotary shaft and a portion disposed outside the screen rotary shaft 12. The portion of the flexible screen 14 disposed outside the screen rotary shaft 12 is disposed between the first housing 11 and the second housing 18. This portion of the flexible screen may offer the display function in the retracted state.

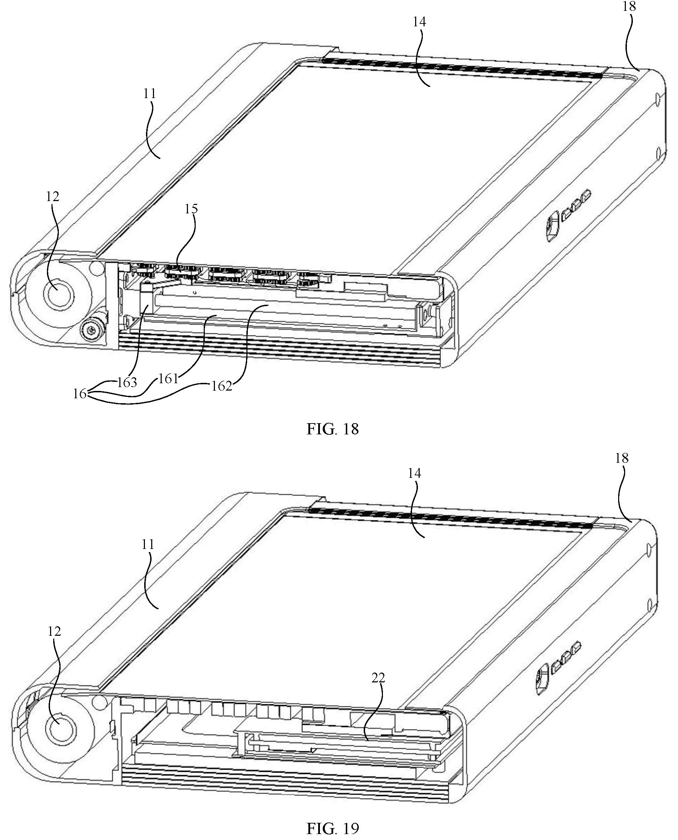

FIG. 18 is a schematic diagram of a cross-section structure of the display apparatus shown in FIG. 1 (the cross-section is a surface that is perpendicular to the display surface of the flexible screen and the axis of the screen rotary shaft). As can be seen by referring to FIG. 18, the telescopic bracket 18 and the lead screw motor assembly 16 are sequentially arranged in a direction away from the flexible screen 14. The telescopic bracket 18 is in contact with the back face of the flexible screen 14 to support the flexible screen 14 throughout the processes of extending and retracting the flexible screen 14, such that the support effect for the flexible screen 14 is enhanced, the evenness of the flexible screen 14 in various states is improved, and the display effect of the flexible screen is improved.

FIG. 19 is a schematic diagram of a cross-section structure of the display apparatus shown in FIG. 1 (the cross-section is a surface that is perpendicular to the display surface of the flexible screen and the axis of the screen rotary shaft). The display apparatus further includes a circuit board 22 disposed on the first bracket (not shown in FIG. 19) in the second housing 18. Furthermore, the display apparatus may further include structures such as a chip on film (COF) and a printed circuit board (PCB).

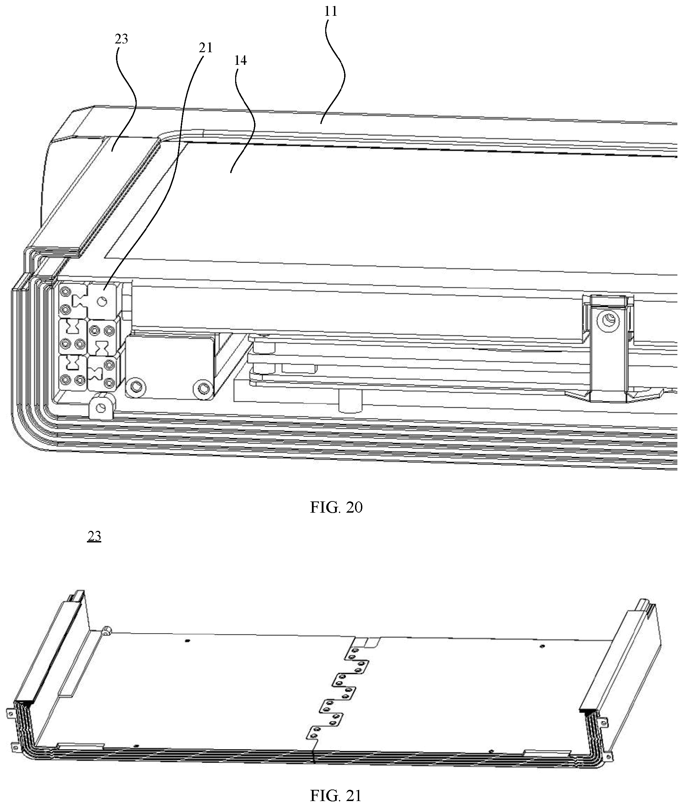

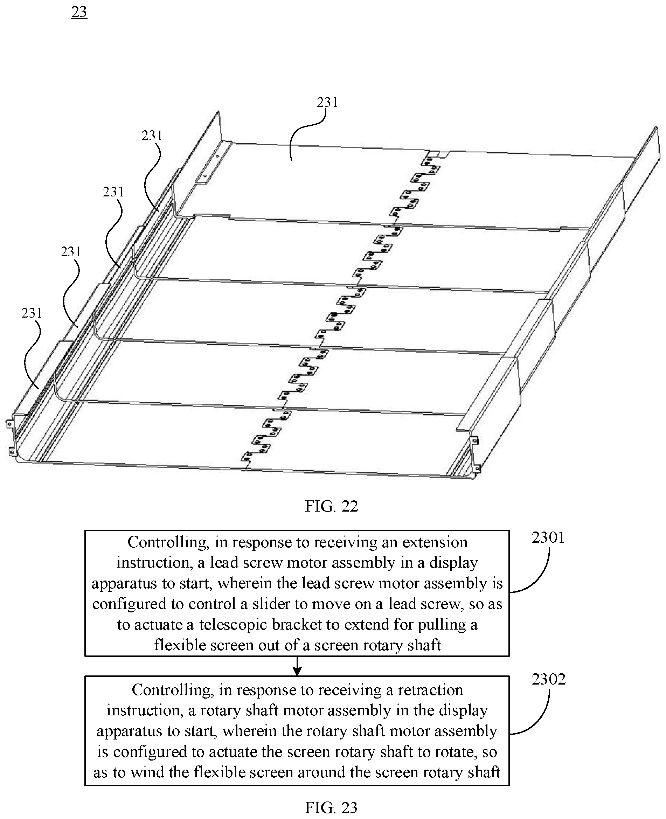

FIG. 20 is a schematic diagram of a cross-section structure of the display apparatus shown in FIG. 1 (the cross-section is a surface that is perpendicular to the display surface of the flexible screen and parallel to the axis of the screen rotary shaft). FIG. 21 is a schematic diagram of a partial structure of the structure shown in FIG. 20 (FIG. 21 is a schematic structural diagram of a rear housing in the retracted state). FIG. 22 is a schematic structural diagram of the structure shown in Fig. 21 (FIG. 22 is a schematic structural diagram of the rear housing shown in FIG. 21 in the extended state). Referring to FIGS. 20, 21, and 22, the display apparatus further includes a rear housing 23. The rear housing 23 includes a plurality of nested U-shaped housings 231. The plurality of U-shaped housings 231 forms a telescopic drawer structure to protect the internal structure of the display apparatus and increase the aesthetics of the display apparatus. The structure of the rear housing 23 in the extended display apparatus is shown in FIG. 6. As can be seen, the rear housing 23 with the drawer structure encloses the internal structure of the display apparatus to provide protection. In addition, the rear housing 23 further improves the structural stability of the display apparatus during retraction and extension. In some embodiments, the length of the rear housing is approximately 71 mm (e.g., +/- 10 mm) in the retracted state, and is approximately 355 mm (e.g., +/- 10 mm) in the extended state, with the storage ratio of 5:1.

In summary, the embodiments of the present disclosure provide a display apparatus. The display apparatus includes a first housing, a screen rotary shaft, a rotary shaft motor assembly, a flexible screen, a telescopic bracket, a lead screw motor assembly, a controller, and a second housing is provided. During extension of the flexible screen, the lead screw motor assembly controls, under the control of the controller, a slider to move on a lead screw, so as to actuate the telescopic bracket to extend for pulling the flexible screen out of the screen rotary shaft; and during retraction of the flexible screen, the rotary shaft motor assembly actuates, under the control of the controller, the screen rotary shaft to rotate, so as to apply a pulling force to the flexible screen and wind the flexible screen around the screen rotary shaft; and in this way, the flexible screen is evenly wound around the screen rotary shaft, such that the possibility of damage to the flexible screen is reduced, and the service life of the display apparatus is prolonged.

FIG. 23 is a flowchart of a method for controlling a display apparatus according to some embodiments of the present disclosure. The method is applicable to the controller of any display apparatus according to the embodiments described above. The method may include the following processes.

In S2301, in response to receiving an extension instruction, a lead screw motor assembly in the display apparatus is controlled to start, the lead screw motor assembly being configured to control the slider to move on the lead screw, so as to actuate the telescopic bracket to extend for pulling the flexible screen out of the screen rotary shaft.

In S2302, in response to receiving a retraction instruction, a rotary shaft motor assembly in the display apparatus is controlled to start, the rotary shaft motor assembly being configured to actuate the screen rotary shaft to rotate, so as to wind the flexible screen around the screen rotary shaft.

The extension and retraction instructions may be triggered by the user, or by the controller based on preset instructions.

The display apparatus may be provided with physical buttons (such as a screen locking button or an independent state switching button), such that the user issues an extension or retraction instruction by triggering the physical buttons; or, the flexible screen of the display apparatus displays virtual buttons, such that the user issues an extension or retraction instruction by triggering the virtual buttons; or, the display apparatus issues an extension or retraction instruction to the controller based on a received voice instruction. Furthermore, the display apparatus may receive an extension or retraction instruction from an external control device. The control device may be a smart wearable device (such as a smart watch, a smart bracelet, a smart ring, and smart glasses), or an independent control device for controlling the display apparatus, which is not limited in the embodiment of the present disclosure.

In addition, the controller may trigger and receive the extension or retraction instruction under the control of preset instructions. For example, triggering the preset instructions for the extension instruction includes: triggering the extension instruction in response to the display apparatus being turned on; triggering the extension instruction in response to the display apparatus being playing back a video; triggering the extension command in response to the display apparatus starting a preset application (App, which may be set by the user; or Apps, such as a paint App, a text reader, a photo browser App, and a photo and video editing App, are set by default by the system). Triggering the preset instructions for the extension instruction includes: triggering the retraction instruction in response to the display apparatus being turned off; triggering the retraction instruction in response to receiving the screen locking instruction, etc.

In summary, the embodiments of the present disclosure provide a method for controlling a display apparatus. In response to receiving an extension instruction by the control assembly, the lead screw motor assembly is controlled to control, under the control of the controller, a slider to move on a lead screw, so as to actuate the telescopic bracket to extend for pulling a flexible screen out of the screen rotary shaft. In response to receiving a retraction instruction, the rotary shaft motor assembly can actuate, under the control of the controller, the screen rotary shaft to rotate, so as to apply a pulling force to the flexible screen and wind the flexible screen around the screen rotary shaft. In this way, the flexible screen is evenly wound around the screen rotary shaft, thereby reducing the possibility of damage to the flexible screen and increasing the service life of the display apparatus. In addition, user operations are simplified, and user experience is improved.

In addition, some embodiments of the present disclosure further provide a display device. The display device includes: a processor and a memory. The memory stores at least one instruction, at least one program, a code set, or an instruction set. The at least one instruction, the at least one program, the code set, or the instruction set is loaded and executed by the processor to perform the method for controlling the display apparatus as described above. The processor may be the controller in the display apparatus according to the embodiments described above.

In addition, some embodiments of the present disclosure further provide a non-volatile computer storage medium. The computer storage medium stores at least one instruction, at least one program, a code set, or an instruction set. The at least one instruction, the at least one program, the code set, or the instruction set is loaded and executed by the processor to perform the method for controlling the display apparatus as described above.

The term "at least one of A and B" in the present disclosure is merely to describe an association relationship between associated objects, indicating three possible types of relationships. For example, at least one of A and B may indicate (A), (A and B), or (B). Likewise, "at least one of A, B, and C" indicates seven possible types of relationships, which may indicate (A), (B), (C), (A and B), (A and C), (C and B), and (A, B and C). Likewise, "at least one of A, B, C, and D" indicates fifteen possible types of relationships, which may indicate (A), (B), (C), (D), (A and B), (A and C), (A and D), (C and B), (D and B), (C and D), (A, B and C), (A, B and D), (A, C and D), (B, C, and D), and (A, B, C, and D).

It should be noted that in the accompanying drawings, the size of layers and regions may be exaggerated for clarity of illustration. Moreover, it should be understood that when an element or layer is referred to as being "above" another element or layer, said element or layer may be directly above the other element, or an intervening layer may be present. In addition, it should be understood that when an element or layer is referred to as being "below" another element or layer, said element or layer may be directly below the other element, or more than one intervening layer or element may be present. In addition, it should also be understood that when a layer or element is referred to as being "between" two layers or two elements, said layer or element may be a unique layer between the two layers or two elements, or more than one intervening layer or element may be present. Similar reference signs indicate similar elements throughout the whole text.

In the present disclosure, the terms "first," "second," "third," and "fourth" are for descriptive purposes only, and should not be construed as indicating or implying relative importance. The term "a plurality of" refers to two or more, unless otherwise specifically defined.

In the several embodiments provided by the present disclosure, it should be understood that the disclosed apparatus and method may be implemented in other manners. For example, the apparatus embodiments described above are merely schematic. For example, the division of a unit only indicates a logically functional division. There may be other divisions in actual implementation. For example, a plurality of units or components may be combined or may be integrated into another system, or some features may be ignored or not executed. For another point, the mutual coupling or direct coupling or communication connection as shown or discussed may be indirect coupling or communication connection via some interfaces, apparatuses or units, and may be in electrical, mechanical or other forms.

A unit described as a discrete component may be or may be not physically separated, and a component displayed as a unit may be or may be not a physical unit, and may be located at a place, or distributed over a plurality of network units. The objects of the solutions of the embodiments may be achieved by selecting some or all of the units according to actual needs.

Persons of ordinary skill in the art may understand that all or some of the steps described in the embodiments described above may be implemented by means of hardware, or by means of hardware instructed by a program stored in a computer-readable storage medium, which may be a read-only memory, a magnetic disk, or an optical disk, etc.

Described above are merely optional embodiments of the present disclosure, but are not intended to limit the present disclosure. Any modifications, equivalent substitutions, improvements and the like made within the spirit and principles of the present disclosure should be included within the scope of protection of the present disclosure.

## Claims

1. A display apparatus, comprising: a first housing, a screen rotary shaft, a rotary shaft motor assembly, a flexible screen, a telescopic bracket, a lead screw motor assembly, a controller, and a second housing, wherein
the screen rotary shaft and the rotary shaft motor assembly are disposed in the first housing, and the flexible screen comprises a first edge and a second edge that are opposite in an extended state, wherein the first edge is connected to the screen rotary shaft, and the second edge is connected to the second housing;
an end of the telescopic bracket is connected to the first housing, and another end of the telescopic bracket is connected to the second housing; the lead screw motor assembly comprises a motor bracket, a lead screw, and a slider disposed on the lead screw, wherein the motor bracket is connected to the first housing, and the slider is connected to the telescopic bracket; and the lead screw motor assembly is configured to drive the slider to move on the lead screw, so as to actuate the telescopic bracket to telescope;
the rotary shaft motor assembly comprises a rotary shaft motor and a transmission member, wherein the transmission member is in linkage with the rotary shaft motor and the screen rotary shaft, and the rotary shaft motor is configured to actuate the screen rotary shaft to rotate; and
the controller is electrically connected to the lead screw motor assembly and the rotary shaft motor assembly.

2. The display apparatus according to claim 1, wherein at least two rotary shaft motor assemblies are disposed, wherein the at least two rotary shaft motor assemblies comprise a first rotary shaft motor assembly and a second rotary shaft motor assembly, wherein a transmission member in the first rotary shaft motor assembly is in linkage with an end of the screen rotary shaft, and a transmission member in the second rotary shaft motor assembly is in linkage with another end of the screen rotary shaft.

3. The display apparatus according to claim 1, wherein at least two lead screw motor assemblies are disposed, wherein the at least two lead screw motor assemblies comprise a first lead screw motor assembly and a second lead screw motor assembly, wherein the first lead screw motor assembly and the second lead screw motor assembly are disposed on two sides of the telescopic bracket in a first direction respectively, the first direction being perpendicular to a telescoping direction of the telescopic bracket.

4. The display apparatus according to claim 1, wherein the telescopic bracket comprises a plurality of crossbeams arranged along a second direction and a plurality of support rods disposed between two adjacent crossbeams in the plurality of crossbeams, wherein two ends of each of the plurality of support rods have gear structures, the gear structures of the each of the plurality of support rods on two sides of each of the plurality of crossbeams are rotatably connected to the each of the plurality of crossbeams and are engaged with each other, and the second direction is parallel to a telescoping direction of the telescopic bracket; and
a back face of the flexible screen is in contact with the telescopic bracket.

5. The display apparatus according to claim 4, wherein the slider of the lead screw motor assembly is connected to the plurality of crossbeams.

6. The display apparatus according to claim 4, wherein the plurality of crossbeams comprises first crossbeams and second crossbeams, wherein the first crossbeams and the second crossbeams are arranged alternately in the second direction, two of the plurality of support rods are provided on a side of each of the first crossbeams, and at least 2 * n of the plurality of support rods are provided on a side of each of the second crossbeams, n being a positive integer greater than or equal to 2.

7. The display apparatus according to claim 4, further comprising: a first device, a second device, a connecting wire, and a plurality of limiting structures, wherein
the plurality of limiting structures are disposed on the plurality of support rods, and each of the plurality of limiting structures comprises a limiting hole; and
the first device and the second device are disposed on two sides of the plurality of limiting structures in the second direction respectively; and an end of the connecting wire is connected to the first device, and another end of the connecting wire passes through limiting holes of the plurality of limiting structures and is connected to the second device.

8. The display apparatus according to claim 7, wherein the second device is the controller, and the first device comprises at least one type of sensor.

9. The display apparatus according to claim 7, wherein each of the plurality of support rods is provided with two of the plurality of limiting structures, wherein the two of the plurality of limiting structures are disposed at two ends of the each of the plurality of support rods respectively.

10. The display apparatus according to claim 1, further comprising: a first sensor, wherein the first sensor is electrically connected to the controller, and the first sensor is disposed at the screen rotary shaft and is configured to acquire a rotation angle of the screen rotary shaft.

11. The display apparatus according to claim 1, further comprising: a second sensor, wherein the second sensor is electrically connected to the controller, and
the second sensor is disposed at the lead screw motor assembly and is configured to acquire a rotation angle of the lead screw.

12. The display apparatus according to claim 10 or 11, wherein the second housing comprises a grip shell and a first bracket, wherein the grip shell is connected to the first bracket, the controller is disposed on the first bracket, and the grip shell is connected to the second edge of the flexible screen.

13. The display apparatus according to claim 1, further comprising: a transmission member bracket disposed in the first housing, wherein
the transmission member comprises a first gear, a second gear, and a third gear, wherein the first gear is connected to the screen rotary shaft; the third gear is in linkage with the rotary shaft motor; and the second gear is rotatably connected to the transmission member bracket, and is engaged with the first gear and the third gear.

14. The display apparatus according to claim 13, wherein the rotary shaft motor assembly further comprises a reducer, wherein the reducer is disposed in the first housing, the reducer and the rotary shaft motor are arranged in the first housing along a length direction of the screen rotary shaft, and the reducer comprises an input shaft and an output shaft, wherein the input shaft is connected to the rotary shaft motor, and the output shaft is connected to the third gear.

15. The display apparatus according to claim 1, further comprising: a telescopic slide rail, wherein the telescopic slide rail comprises a first strip rail, a second strip rail, and at least one middle strip rail, wherein the first strip rail, the at least one middle strip rail, and the second strip rail are sequentially slidably connected along a telescoping direction of the telescopic slide rail, the telescoping direction of the telescopic slide rail is parallel to a telescoping direction of the telescopic bracket; and
the first strip rail is connected to the first housing, and the second strip rail is connected to the second housing.

16. The display apparatus according to claim 15, wherein an end of the first strip rail is connected to the first housing; and
the telescopic slide rail comprises a first connector and a second connector, wherein the first connector is connected to the first strip rail and the motor bracket, and the second connector is connected to the second strip rail and the second housing.

17. The display apparatus according to claim 16, wherein the second housing comprises a grip shell and a first bracket, wherein the grip shell is connected to the first bracket, the controller is disposed on the first bracket, and the grip shell is connected to the second edge of the flexible screen; and
the second connector is connected to the second strip rail and the first bracket.

18. The display apparatus according to claim 15, wherein two telescopic slide rails are disposed, wherein the two telescopic slide rails are disposed on two sides of the telescopic bracket in a first direction respectively; the first direction being perpendicular to the telescoping direction of the telescopic bracket.

19. A method for controlling a display apparatus, applicable to the controller in the display apparatus according to any one of claims 1 to 18, the method comprising:
controlling, in response to receiving an extension instruction, a lead screw motor assembly in the display apparatus to start, wherein the lead screw motor assembly is configured to control a slider to move on a lead screw, so as to actuate a telescopic bracket to extend for pulling a flexible screen out of a screen rotary shaft; and
controlling, in response to receiving a retraction instruction, a rotary shaft motor assembly in the display apparatus to start, wherein the rotary shaft motor assembly is configured to actuate the screen rotary shaft to rotate, so as to wind the flexible screen around the screen rotary shaft.

20. A display device, comprising: a processor and a memory, wherein the memory stores at least one instruction, at least one program, a code set, or an instruction set; wherein the at least one instruction, the at least one program, the code set, or the instruction set is loaded and executed by the processor to perform the method for controlling the display apparatus according to claim 18.
